# EUROPÄISCHE PATENTSCHRIFT

(11) **EP 2 678 923 B1**
(45) Veröffentlichungstag und Bekanntmachung des Hinweises auf die Patenterteilung: **16.10.2019**
(21) Anmeldenummer: 12702821.5
(22) Anmeldetag: 02.02.2012
(51) Int. Cl.: H02K 15/02, H02K 1/12

(54) **RÜCKSCHLUSS, INSBESONDERE FÜR EINE ELEKTRISCHE MASCHINE UND VERFAHREN ZUR HERSTELLUNG EINES RÜCKSCHLUSSES FÜR EINEN ROTOR ODER STATOR EINER ELEKTRISCHEN MASCHINE**
BACK IRON, IN PARTICULAR FOR AN ELECTRICAL MOTOR AND METHOD FOR PRODUCING A BACK IRON FOR A ROTOR OR STATOR OF AN ELECTRICAL MOTOR
CULASSE MAGNÉTIQUE, EN PARTICULIER POUR UNE MACHINE ÉLECTRIQUE ET PROCÉDÉ DE PRODUCTION D'UNE CULASSE POUR UN ROTOR OU UN STATOR D'UNE MACHINE ÉLECTRIQUE

(30) Priorität: 23.02.2011 DE 102011000895
(43) Veröffentlichungstag der Anmeldung: 01.01.2014
(73) Patentinhaber: Hidria Bausch GmbH, 71665 Vaihingen/Enz (DE)
(72) Erfinder: BAUSCH, Günther, 71665 Vaihingen/Enz (DE); FAASS, Rainer, 75210 Keltern (DE)
(74) Vertreter: Herrmann, Jochen
(86) Internationale Anmeldenummer: PCT/EP2012/051806
(87) Internationale Veröffentlichungsnummer: WO 2012/113633

(56) Entgegenhaltungen:
- DE-A1- 1 427 319
- DE-A1-102005 062 860
- DE-A1-102009 001 650
- US-A1- 2005 023 913
- US-A1- 2009 083 965

## Beschreibung

Die Erfindung betrifft einen Rückschluss, insbesondere einen magnetischen Rückschlusskern, beispielsweise für einen Rotor oder Stator einer elektrischen Maschine, der mehrere Lagen aus Metallblech oder -draht (nachfolgend gemeinsam Metallband genannt) aufweist, wobei die Lagen wendel- oder schraubenförmig angeordnet sind.

Die Erfindung betrifft weiterhin ein Verfahren zur Herstellung eines solchen Rückschlusses.

Aus der DE 10 2008 044 097 A1 ist ein Rückschluss bekannt, der aus mehreren flachen Metalllagen aufgebaut ist. Dabei wird ein Flachdraht um einen Zylinder gewickelt. Dabei ergibt sich ein zylindrischer Spiralkörper, der aus mehreren Lagen des Metalldrahtes zusammengesetzt ist. Zwischen den einzelnen Lagen besteht eine gewisse Federvorspannung, sodass das Lagenpaket auffedert. Es muss daher zusammengedrückt und anschließend fixiert werden. Hierzu wird beispielsweise eine Schweißverbindung verwendet oder ein Lackmaterial eingesetzt, das eine Verklebung bewirkt. Dadurch, dass die einzelnen Lagen aufeinander gepresst werden müssen, entsteht eine gewisse Ungenauigkeit im Außen- bzw. Innendurchmesser des Lamellenpaketes.

DE 10 2009 001 650 A1 offenbart eine elektrische Maschine, die einen Rotor und einen Stator aufweist. Dabei ist für den Rotor bzw. für den Stator ein Blechpaket mit einem im Wesentlichen rechteckigen Querschnitt vorgesehen. Das Blechpaket wird aus einem Blechstreifen gebildet, wobei der Blechstreifen spulenförmig gewickelt ist.

US 2009/0083965 A1 offenbart ein Verfahren zur Herstellung eines Stator-Pakets eines Elektromotors. Dabei wird ein Metallstreifen kammförmig gestanzt und anschließend zu einem Blechpaket gewickelt.

US 2005/0023913 A1 offenbart einen Elektromotor.

In DE 1 427 319 ist ein Verfahren zur Herstellung eines man Magnetkerns für einen Elektromotor beschrieben. Ähnlich wie bei der oben erwähnten US 2009/0083965 A1 wird hier einen Blechstreifen in einer Stanzvorrichtung erzeugt, der kammartig ausgebildet ist. Anschließend wird dieser Blechstreifen in einer Wickelstation zu einem Lamellenpaket gewickelt.

DE 10 2005 062 860 A1 beschreibt ein Verfahren zur Herstellung von gebogenen Federelementen aus einem Federstahl-Band.

Es ist Aufgabe der Erfindung, einen Rückschluss der eingangs erwähnten Art zu schaffen, der mit hoher Maßgenauigkeit einfach gefertigt werden kann.

Es ist weiterhin Aufgabe der Erfindung, ein Verfahren zur Herstellung eines solchen Rückschlusses bereitzuhalten.

Die den Rückschluss betreffende Aufgabe der Erfindung wird durch die Merkmale des Anspruchs 1 gelöst.

Gemäß einer bevorzugten Ausgestaltungsvariante der Erfindung ist es vorgesehen, dass die Lagen aus magnetisch leitendem Flachdraht oder einem Blechstreifen, insbesondere aus Spaltblech, insbesondere aus hochwertigem Elektroblech mit geringem Wattverlust, bestehen. Spaltblech hat den Vorteil, dass ein exakter rechteckförmiger oder quadratischer Querschnitt des Metallbandes eingehalten werden kann. Dies führt zu verbesserten Gebrauchseigenschaften.

Wegen der Verwendung eines Blechstreifens können am Streifenrand Schneidgrate durch das Spalten desselben gebildet sein. Damit diese nicht über die Außen- oder Innenkontur des Rückschlusses vorstehen, ist erfindungsgemäß vorgesehen, dass die Lagen mit Anlageflächen aneinander liegen, und dass zwischen den Lagen im Bereich der Anlageflächen randseitige Grate angebogen und oder randseitige Materialprägungen vorgesehen sind. Dabei wird der Grat im Randbereich durch eine Materialverformung oder -verdrängung in die Ebene der Anlagefläche eingeformt. Vorzugsweise ist der Grat in die Anlagefläche derart eingeformt, dass er nicht oder nur geringfügig über diese vorsteht. Dann können die Anlageflächen plan aufeinander liegen.

Ein erfindungsgemäßer Rückschluss kann derart ein, dass die Enden des Metallbandes um 180° zueinander versetzt angeordnet sind. Hierdurch wird die plan parallele Ausrichtung der Stirnseiten des Rückschlusses angenähert.

Ein nach der Erfindung gestalteter Rückschluss kann auch derart konstruiert sein, dass die Lagen eine Innenseite und eine Außenseite aufweisen, wobei die Innenseite dem den Lagenstapel umschlossenen Innenraum und die Außenseite dem Innenraum abgewandt ist, und dass die Lagen mittels einer oder mehreren linienförmigen Schweißverbindungen auf der Innen- und/oder Außenseite miteinander verbunden sind. Diese Schweißverbindung kann einfach mittels einer Laserschweißeinrichtung hergestellt werden. Dabei entsteht kein Schweißverzug, der die Maßhaltigkeit des Rückschlusses beeinflusst und die Schweißverbindung kann insbesondere gegenüber bekannten Klebeverbindungen in kurzer Taktzeit hergestellt werden. Um keine spürbare Verminderung der elektromagnetischen Kennwerte des Kerns infolge der Verschweißung zu erhalten, kann es vorgesehen sein, dass die Querschnittsfläche der linienförmigen Schweißnaht kleiner oder gleich 2 mm² beträgt.

Besonders bevorzugt sollte die Tiefe der Schweißnaht in Radialrichtung ≤ 50 % der Breitenerstreckung der Lage in diese Richtung betragen. Hierdurch wird vermieden, dass sich der Rückschluss infolge zu hoher Verlustleistungen unzulässig erwärmt. Dieser Effekt kann auch unterstützt werden, wenn die Schweißnahtbreite in Umfangsrichtung ≤ 2,5 mm beträgt.

Die das Verfahren betreffende Aufgabe der Erfindung wird durch die Merkmale des Anspruchs 6 gelöst.

Bevorzugt wird ein Metallblechstreifen verwendet, der einen rechteckförmigen Querschnitt aufweist, und der um die Mittelquerebene der größeren Rechteckerstreckung gewunden wird. Mithin wird also der Metallblechstreifen um seine Biegeachse gebogen, die das höhere Widerstandsmoment gegenüber Biegung aufweist. Mittels des Windverfahrens kann die Biegung hier zuverlässig durchgeführt werden, ohne dass das Metallband eine unzulässige Verformung in der Querschnittsebene erhält.

Erfindungsgemäß ist vorgesehen, dass das Metallband im Bereich seiner gegenüberliegenden Kanten an Führungsrollen vorbeigeführt wird, und dass an den Führungsrollen ein Grat der Bandkante verprägt wird. Wenn beispielsweise das Metallband als Spaltband vorliegt, dann entstehen durch den Spaltvorgang an den Kanten Grate. Diese würden störend über die Innen- bzw. Außenkontur des Rückschlusses vorstehen. Dadurch, dass dieser Grat nun verprägt wird, steht er nicht mehr störend vor, sondern ist in den Bereich zwischen den Lagen verlagert.

Erfindungsgemäß wird nun der Grat also in den Bereich zwischen den Lagen eingebogen. Denkbar ist es dabei, dass der Grat in einem oder mehreren Umformschritten derart abgebogen wird, dass er im Bereich der Anlageflächen des Metallbandes (Anlageflächen der Lagen aneinander) bündig aufliegt. Der Grat beeinfluss dann die Aufbauhöhe des Lagenpaketes nicht oder nur minimal.

Um eine exakte Windung des Metallbandes erreichen zu können, kann vorgesehen sein, dass das Metallband mittels wenigstens einer Umlenk- und einer Biegerolle abgebogen wird. Das Metallband wird zwischen der Biege- und der Umlenkrolle zuverlässig geführt.

Eine besonders hohe Maßhaltigkeit des Rückschlusses wird dadurch erreicht, dass das Metallband mittels einer Biegerolle über das Biegungsendmaß des Spiralkörpers hinaus abgebogen und mittels einer Rückbiegerolle auf das Biegungsendmaß zurückgebogen wird. Mit der Biegerolle wird zunächst ein hohes Umformmaß erreicht, bei dem ein Rücksprung bedingt durch den elastischen Verformungsanteil entsteht. Dieser Rücksprung wird nun durch die Überbiegung kompensiert. Da jedoch nicht exakt ein reproduziertes Rückbiegungsverhalten vorliegt, wird mittels der Biegerolle eine zwangsweise Rückbiegung auf das Biegungsendmaß bewirkt.

Um ein Ausknicken des Metallbandes auch dann zuverlässig zu verhindern, wenn hohe Umformraten gefordert sind, kann es vorgesehen sein, dass das Metallband in einer Umlenk- und/oder Biegerolle und/oder den Führungsrollen in einer Nut geführt wird.

Eine einfach gestaltete Windvorrichtung zeichnet sich dadurch aus, dass die Biegerolle und die Umlenkrolle ortsfest gelagert sind, und das gewundene Metallband auf einen drehbar gelagerten Werkstückträger aufgespult wird. Dabei kann beispielsweise das Metallband um Führungselemente des Werkstückträgers geführt werden.

Eine denkbare Erfindungsvariante kann dergestalt sein, dass das Metallband im ungebogenen Zustand mittels einer Vorschubeinheit der oder den Biegerollen zugeführt wird, und dass die Biegerolle/-n passiv mitlaufen. Auf diese Weise wird verhindert, dass in das Metallband im Bereich der Biegerolle/-n unzulässige Verformungen eingebracht werden. Hierdurch kann ein weitestgehend reproduzierbarer Biegevorgang erfolgen, der zu einer hohen Maßhaltigkeit führt.

Eine Erfindungsausgestaltung kann weiterhin derart sein, dass ein Lagenpaket aus mehreren Lagen gewunden wird, dass dann die Höhe des Lagenpaketes in Lagenpaketachsrichtung ermittelt wird, dass die Differenz zwischen der Lagenpakethöhe und der Sollbauteilhöhe ermittelt wird, und dass aus dieser Differenz die erforderliche noch fehlende Lagenanzahl ermittelt und gewunden wird. Hierdurch wird sichergestellt, dass der Rückschluss stets zuverlässig die geforderte Sollbauteilhöhe erhält.

Die Erfindung wird im Folgenden anhand eines in den Zeichnungen dargestellten Ausführungsbeispieles näher erläutert. Es zeigen:
- Figur 1: einen Rückschluss bestehend aus einem Metallband;
- Figur 2: eine Windvorrichtung zur Fertigung des Rückschlusses gemäß Figur 1;
- Figur 2A: eine Querschnittsansicht des Metallbandes im Bereich einer Entgratvorrichtung;
- Figur 3: ein Detail der Windvorrichtung gemäß Figur 2;
- Figur 4: eine Querschnittsansicht des Metallbandes; und
- Figur 5: eine schematische Detailansicht des Rückschlusses gemäß Figur 1.

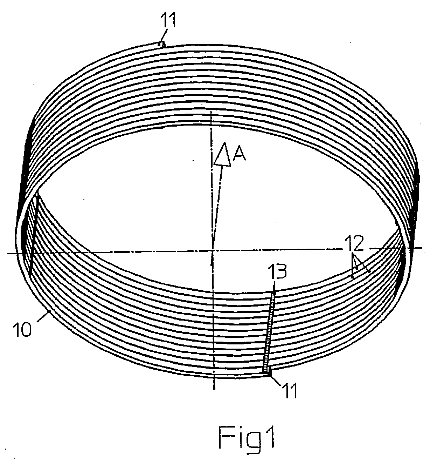

Figur 1 zeigt einen Rückschluss 10, nämlich einen magnetischen Rückschlusskern, wie er für einen Stator oder einen Rotor eines Elektromotors zum Einsatz kommt. Dabei sind mehrere Lagen 12 des Metallbandes 40 spiralförmig gewunden und bilden einen zylindrischen Körper, der einen Innenraum umschließt. Die Enden 11 des Metallbandes 40 sind um 180° versetzt angeordnet, sodass die quer zur Rückschlussachsrichtung A verlaufenden Stirnseiten des Rückschlusses 10 annähernd plan parallel zueinander sind.

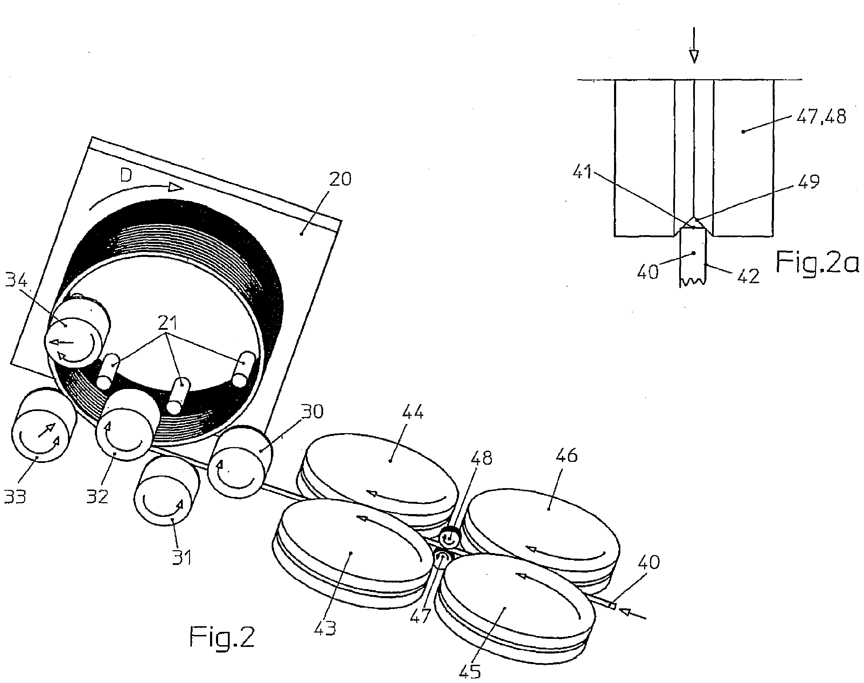

Zur Fertigung des Rückschlusses 10 wird ein Metallband 40 verwendet, das, wie Figur 2 zeigt, einer Windvorrichtung zugeführt wird.

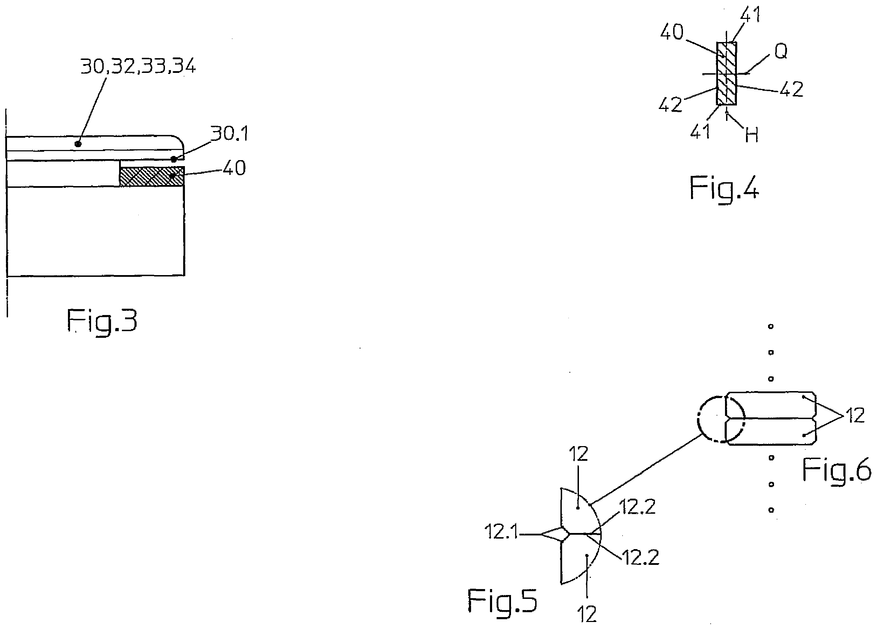

Figur 4 zeigt eine Querschnittsansicht dieses Metallbandes 40. Wie Figur 4 erkennen lässt, weist das Metallband 40 einen rechteckförmigen Querschnitt auf, der eine Hoch- und eine Querachse H und Q bildet. Der Querschnitt ist von Längsseiten 42 und von Querseiten 41 begrenzt. Vorteilhafterweise wird zur Fertigung des Rückschlusses 10 ein Blechstreifen, besonders bevorzugt ein Spaltblech, verwendet, das kostengünstig erhältlich ist.

Wie Figur 2 zeigt, wird das Metallband 40 der Windvorrichtung zugeführt. Dies erfolgt mittels einer Vorschubeinheit, die in Figur 2 von den Vorschubwalzen 43 bis 46 gebildet wird. Jeweils zwei Vorschubwalzen 43, 44; 45, 46 bilden ein Rollenpaar, wobei die Vorschubwalzen 43 bis 46 an den Längsseiten 42 des Metallbandes 40 gegenüberliegend anliegen und dieses einspannen. Die Vorschubwalzen 43 bis 46 sind motorisch angetrieben und schieben das Metallband 40 in Richtung auf die Windvorrichtung. Zwischen den beiden Rollenpaaren der Vorschubeinheit sind Entgratrollen 47, 48 angeordnet. Die beiden Entgratrollen 47, 48 sind passiv mitlaufend und bilden ein Rollenpaar. Dabei fassen die Entgratrollen 47, 48 das Metallband 40 gegenüberliegend im Bereich der Querseiten 41 ein, wie dies Figur 2A näher veranschaulicht.

In die Mantelfläche der Entgratrollen 47, 48 sind umlaufende Nuten 49 eingebracht. Die Nut 49 wird dabei seitlich von zwei V-förmig zueinander angestellten Nutseitenwänden begrenzt. Die Nutseitenwände liegen an den Kantenbereichen des Metallbandes 40 an, an denen die Querseiten 41 in die Längsseiten 42 übergehen. Ein in diesen Bereichen eventuell vorhandener Grat wird von den Entgratrollen 47, 48 in die Oberfläche der Längsseiten 42 oberflächenbündig eingeprägt, wie dies in Figur 5 detailliert ist. Derartige Grate können beispielsweise vorliegen, wenn das Metallband als Spaltband ausgebildet ist. Wie die Pfeildarstellung zeigt, läuft das Metallband 40 im Anschluss an die Vorschubeinheit zunächst einem Rollenpaar, bestehend aus zwei Führungsrollen 30 und 31 zu. Im Bereich der Führungsrollen 30 und 31 wird eine zentrierte Zuführung zur Windvorrichtung erreicht.

Die Gestaltung der Führungsrollen 30, 31 (und auch der übrigen, in der Windvorrichtung verwendeten Rollen) ist näher in Figur 3 detailliert. Wie diese Darstellung verdeutlicht, ist in den Außenumfang der Führungsrolle 30 bis 34 eine Nut 30.1 eingeschnitten. In dieser Nut 30.1 ist das Metallband 40 mit Spiel geführt.

Nachdem das Metallband 40 die Führungsrollen 30, 31 durchlaufen hat, gelangt es zu einer Umlenkrolle 32, die mit einer Biegerolle 33 zusammenarbeitet. An der Biegerolle 33 wird das Metallband 40 verformt (siehe Pfeildarstellung auf Biegerolle 33). Bei dieser Umformung werden die spiralförmigen Lagen 12 gewunden.

Wie Figur 5 symbolisiert, liegen beim Rückschluss die Lagen 12 aneinander. Die Grate 12.1 sind auf die zwischen den Lagen 12 gebildeten Anlageflächen 12.2 aufgeprägt. Die Anlageflächen 12.2 werden dabei von den Längsseiten 42 des Metallbandes 40 gebildet.

Mit der Umlenkrolle 32 und der Biegerolle 33 arbeitet ein drehbarer Werkstückträger 20 zusammen. Der Werkstückträger 20 weist eine Platte auf, auf der konzentrisch Zentrierelemente 21, beispielsweise in Form von Stiften, befestigt sind. Beim Winden des Metallbandes 40 legen sich infolge der Drehung des Werkzeugträgers 20 die einzelnen Lagen 12 um die Zentrierelemente 21. Um eine exakte Fertigung zu ermöglichen, sollte die Vorschubgeschwindigkeit des Metallbandes 40 mit der Drehgeschwindigkeit des Werkzeugträgers 20 synchronisiert werden. Die Biegerolle 33 überbiegt das Metallband 40 über das geforderte Fertigungsendmaß. Nach der Biegerolle 33 gelangt das Metallband 40 zu einer Rückbiegerolle 34. Wenn das Metallband 40 die Rückbiegerolle 34 erreicht, verliert es seinen, durch die Biegerolle 33 aufgegebenen elastischen Verformungsanteil. Die Rückbiegerolle 34 biegt dann das Metallband 40 entgegen der durch die Biegerolle 33 induzierten Biegung zurück auf das Fertigungsendmaß (siehe Pfeildarstellung auf Rückbiegerolle 34).

Um ein exaktes Fertigungsendmaß in Rückschlussachsrichtung A zu erhalten, wird zunächst eine gewisse Anzahl von Lagen 12 gewunden, die annähernd die Bauteilhöhe bildet. Dann wird die gefertigte Gesamtlagenhöhe ermittelt, und die Differenz zu der Sollbauteilhöhe ermittelt. Dann wird aus dieser Differenz und der Höhe des Metallbandes 40 (Abstand zwischen den Längsseiten 42) die noch fehlende Anzahl der Lagen 12 ermittelt. Anschließend wird der Windvorgang fortgesetzt und die fehlende Zahl an Lagen 12 verformt. Schließlich wird das Metallband 40 derart abgeschnitten, dass, wie in Figur 1 gezeigt, die Enden 11 des Metallbandes 40 um 180° zueinander versetzt sind.

Wie oben erwähnt wurde, sind die Führungsrollen 30 und 31, sowie die Umlenkrolle 32, die Biegerolle 33 und die Rückbiegerolle 34 gemäß Figur 3 aufgebaut und weisen eine umlaufende Nut 30.1 auf. Diese Rollen sind alle ortsfest angeordnet und um in der Figur 2 nicht dargestellte Lagerungen drehbar gelagert, wie dies die Pfeildarstellungen in den Rollen zeigen. Die Führungsrollen 30, 31 und die Biegesowie die Rückbiegerolle 33 und 34 laufen passiv mit, sind also nicht angetrieben.

Zur Fixierung der Lagen 12 wird der Werkstückträger 20 nach Abschluss des Windvorganges und dem Schneiden des Endes 11 mitsamt dem Lagenpaket aus dem durch die Rollen gebildeten Windbereich herausgefahren. Er wird dann einer Schweißvorrichtung zugeführt. Dort werden im Bereich der Innenseite des Rückschlusses 10 oder der Außenseite des Rückschlusses 10 ein oder mehrere linienförmige Schweißungen 13 erzeugt, wie dies in Figur 1 symbolisiert ist. Über diese Schweißungen 13 werden die Lagen 12 gegeneinander fixiert. Denkbar ist auch, dass mittels eines Lacks oder einer Verklebung die einzelnen Lagen 12 gegeneinander fixiert werden.

## Patentansprüche

1. Rückschluss, insbesondere für einen Rotor oder einen Stator einer elektrischen Maschine, der mehrere Lagen (12) aus Metallblech oder -draht aufweist, wobei die Lagen (12) wendel- oder schraubenförmig angeordnet sind, und mit Anlageflächen (12.2) aneinander liegen, und wobei die Gewichtskraft der einzelnen Lagen (12) bei einer Ausrichtung des Lamellenpakets, bei der die Rückschlussachsenrichtung in Richtung der Schwerkraft verläuft größer ist als die zwischen den Lagen (12) in Rückschlussachsrichtung (A) wirkende Federkraft des Metallblechs oder - drahts,
**dadurch gekennzeichnet,**
**dass** zwischen den Lagen (12) im Bereich der Anlageflächen (12.2) zumindest bereichsweise angeordnete randseitige Grate (12.1) eingebogen oder angeprägt angeordnet sind.

2. Rückschluss nach Anspruch 1,
**dadurch gekennzeichnet,**
**dass** die Lagen (12) aus magnetisch leitendem Flachdraht oder einem Blechstreifen, insbesondere aus Spaltblech, bestehen.

3. Rückschluss nach einem der Ansprüche 1 oder 2,
**dadurch gekennzeichnet,**
**dass** die Enden (11) des Metallblechs oder -drahts um 180° zueinander versetzt angeordnet sind.

4. Rückschluss nach einem der Ansprüche 1 bis 4,
**dadurch gekennzeichnet,**
**dass** die Lagen (12) eine Innenseite und eine Außenseite aufweisen, wobei die Innenseite dem Lagenstapel umschlossenen Innenraum und die Außenseite dem Innenraum abgewandt ist, und dass die Lagen (12) mittels linienförmigen Schweißverbindungen auf der Innen- und/oder Außenseite miteinander verbunden sind.

5. Rückschluss nach Anspruch 4,
**dadurch gekennzeichnet,**
**dass** die Querschnittsfläche der linienförmigen Schweißverbindung ≤ 2 mm² ist, und/oder dass die Tiefe der Schweißverbindung in Radialrichtung ≤ 50 % der Breitenerstreckung der Lagen (12) in diese Richtung beträgt, und/oder dass die Schweißnahtbreite in Umfangsrichtung ≤ 2,5 mm beträgt.

6. Verfahren zur Herstellung eines Rückschlusses gemäß einem der Ansprüche 1 bis 5, insbesondere für einen Rotor oder Stator einer elektrischen Maschine, wobei der Rückschluss in Form eines Spiralkörpers aus einem als Metallband (40) ausgebildeten Metallblechstreifen gewunden wird,
**dadurch gekennzeichnet,**
**dass** das Metallband (40) im Bereich seiner gegenüberliegenden Kanten an Entgratrollen (47, 48) vorbei geführt wird, und dass an den Entgratrollen (47, 48) ein abstehender Grat der Bandkante verprägt wird.

7. Verfahren nach Anspruch 6,
**dadurch gekennzeichnet,**
**dass** ein Metallblechstreifen verwendet wird, der einen rechteckförmigen Querschnitt aufweist, und der um die Mittelquerebene der größeren Rechteckerstreckung gewunden wird.

8. Verfahren nach einem der Ansprüche 6 oder 7,
**dadurch gekennzeichnet,**
**dass** das Metallband (40) mittels wenigstens einer Umlenk- und einer Biegerolle (32, 33) abgebogen wird, und/oder dass das Metallband (40) mittels der Biegerolle (33) über das Biegungsendmaß des Spiralkörpers hinaus abgebogen und mittels einer Rückbiegerolle (34) auf das Biegungsendmaß zurückgebogen wird.

9. Verfahren nach einem der Ansprüche 6 bis 8,
**dadurch gekennzeichnet,**
**dass** das Metallband (40) in der Umlenk- und/oder der Biegerolle (32, 33) und/oder den Führungsrollen (30, 31) in einer Nut (30.1) geführt wird.

10. Verfahren nach einem der Ansprüche 6 bis 9,
**dadurch gekennzeichnet,**
**dass** die Biegerolle (33) und die Umlenkrolle (32, 33) ortsfest gelagert sind, und das gewundene Metallband (40) auf einem drehbar gelagerten Werkzeugträger (20) aufgespult wird.

11. Verfahren nach einem der Ansprüche 6 bis 10,
**dadurch gekennzeichnet,**
**dass** das Metallband (40) im ungebogenen Zustand mittels einer Vorschubeinheit der oder den Biegerollen (33) zugeführt wird, und die Biegerolle/n (33) passiv mitlaufen.

12. Verfahren nach einem der Ansprüche 6 bis 11,
**dadurch gekennzeichnet,**
**dass** ein Lagenpaket aus mehreren Lagen (12) gewunden wird, dass dann die Höhe des Lagenpaketes in Lagenpaketachsrichtung ermittelt wird, dass die Differenz zwischen der Lagenpakethöhe und der Sollbauteilhöhe ermittelt wird, und dass aus dieser Differenz die erforderliche, noch fehlende Lagenanzahl ermittelt und gewunden wird.

13. Verfahren nach einem der Ansprüche 6 bis 13,
**dadurch gekennzeichnet,**
**dass** eine die Lagen (12) verbindende Schweißung erzeugt wird.

## Claims

1. A back iron, in particular for a rotor or a stator of an electrical motor, having a plurality of layers (12) made of metal plate or wire, wherein the layers (12) are arranged in a spiral or screw shape, and abut each other with abutment surfaces (12.2), and wherein the weight force of the individual layers (12) in the case of an orientation of the laminated core in which the back iron axis direction extends in the direction of gravity is greater than the spring force of the metal plate or wire acting between the layers (12) in the back iron axis direction (A),
**characterised in that**
edge-side ridges (12.1) arranged at least in regions between the layers (12) in the region of the abutment surfaces (12.2) are arranged bent or impressed.

2. The back iron according to claim 1,
**characterised in that**
the layers (12) consist of magnetically conductive flat wire or a metal strip, in particular a split plate.

3. The back iron according to any one of claims 1 or 2,
**characterised in that**
the ends (11) of the metal plate or wire are arranged offset by 180° in relation to one another.

4. The back iron according to any one of claims 1 to 4,
**characterised in that**
the layers (12) have an inner side and an outer side, wherein the inner side faces away from interior space enclosed by the layer stack and the outer side faces away from the interior space, and **in that** the layers (12) are connected to one another by means of linear welded joints on the inner side and/or outer side.

5. The back iron according to claim 4,
**characterised in that**
the cross-sectional area of the linear welded joint is ≤ 2 mm², and/or **in that** the depth of the welded joint in the radial direction is ≤ 50% of the widthwise extension of the layers (12) in said direction, and/or **in that** the weld seam width in the circumferential direction is ≤ 2.5 mm.

6. A method for producing a back iron according to any one of claims 1 to 5, in particular for a rotor or stator of an electrical motor, wherein the back iron in the form of a spiral body is wound from a metal plate strip designed as a metal band (40),
**characterised in that**
the metal band (40) is guided past deburring rollers (47, 48) in the region of the opposite edges thereof, and **in that** a protruding ridge of the band edge is embossed on the deburring rollers (47, 48).

7. The method according to claim 6,
**characterised in that**
a metal plate strip is used, which has a rectangular cross section, and which is wound around the central transverse plane of the larger rectangular extension.

8. The method according to one of claims 6 or 7,
**characterised in that**
the metal band (40) is bent by means of at least one deflecting and bending roller (32, 33), and/or that the metal band (40) is bent beyond the bending end dimension of the spiral body by means of the bending roller (33) and by means of a reverse bending roller (34) is bent back to the bending end dimension.

9. The method according to one of claims 6 to 8,
**characterised in that**
the metal band (40) is guided in the deflecting and/or bending roller (32, 33) and/or the guide rollers (30, 31) into a groove (30.1).

10. The method according to one of claims 6 to 9,
**characterised in that**
the bending roller (33) and the deflecting roll (32, 33) are mounted in a stationary manner, and the wound metal band (40) is wound on a rotatably mounted tool carrier (20).

11. The method according to one of claims 6 to 10,
**characterised in that**
the metal band (40) is fed in the unbent state by means of a feed unit or the bending rollers (33), and the bending roller(s) (33) run along passively.

12. The method according to one of claims 6 to 11,
**characterised in that**
a layer set made up of a plurality of layers (12) is wound, **in that** then the height of the layer set is determined in the layer set direction, **in that** the difference between the layer set height and the target component height is determined, and **in that** from this difference, the required, still missing number of layers is determined and wound.

13. The method according to any one of claims 6 to 13,
**characterised in that**
a weld connecting the layers (12) is produced.

## Revendications

1. Culasse magnétique, en particulier pour un rotor ou un stator de machine électrique, qui comprend plusieurs couches (12) de tôle ou de fil métallique, lesdites couches (12) étant agencées en hélice ou en spirale et avec des surfaces de butée (12.2) en appui les unes contre les autres et le poids des couches individuelles (12) avec une orientation du jeu de lamelles, dans laquelle la direction de l'axe de culasse s'étend dans le sens de la gravité, est supérieur à la force élastique de la tôle ou du fil métallique agissant entre les couches (12) dans la direction de l'axe de culasse (A),
**caractérisée en ce que**
des arêtes (12.1) disposées côté bord au moins par endroits sont agencées pliées ou gaufrées dans la zone des surfaces de butée (12.2) entre les couches (12).

2. Culasse magnétique selon la revendication 1,
**caractérisée en ce que**
les couches (12) sont constituées d'un fil plat magnétiquement conducteur ou d'une bande métallique, en particulier d'une plaque fendue.

3. Culasse magnétique selon l'une quelconque des revendications 1 ou 2,
**caractérisée en ce que**
les extrémités (11) de la tôle ou du fil métallique sont décalées de 180° les unes par rapport aux autres.

4. Culasse magnétique selon l'une quelconque des revendications 1 à 4,
**caractérisée en ce que**
les couches (12) ont une face interne et une face externe, la face interne de la pile de couches étant fermée vers l'intérieur et la face externe étant opposée à l'intérieur et **en ce que** les couches (12) sont reliées les unes aux autres au moyen de joints soudés en forme de lignes au niveau de la face interne et/ou externe.

5. Culasse magnétique selon la revendication 4,
**caractérisée en ce que**
la surface en section transversale du joint soudé en forme de ligne est ≤ 2 mm² et/ou **en ce que** la profondeur du joint soudé dans la direction radiale est de ≤ 50 % de l'étendue en largeur des couches (12) dans cette direction et/ou **en ce que** la largeur circonférentielle du cordon de soudure est ≤ 2,5 mm.

6. Procédé de fabrication d'une culasse magnétique selon l'une quelconque des revendications 1 à 5, en particulier pour un rotor ou un stator d'une machine électrique, dans lequel la culasse magnétique est enroulée sous la forme d'un corps en spirale à partir d'une bande de tôle conçue sous forme d'une bande métallique (40),
**caractérisé en ce que**
la bande métallique (40) est guidée par des rouleaux d'ébavurage (47, 48) dans la zone de ses bords opposés et **en ce qu'**une arête faisant saillie du bord de la bande est estampée sur les rouleaux d'ébavurage (47, 48).

7. Procédé selon la revendication 6,
**caractérisé en ce que**
on utilise une bande de tôle qui présente une section transversale rectangulaire enroulée autour du plan transversal médian de la plus grande étendue rectangulaire.

8. Procédé selon l'une quelconque des revendications 6 ou 7,
**caractérisé en ce que**
la bande métallique (40) est courbée au moyen d'au moins un rouleau de renvoi et d'un rouleau de pliage (32, 33) et/ou **en ce que** la bande métallique (40) est courbée au moyen du rouleau de pliage (33) au-delà de la dimension finale de pliage du corps en spirale et est repliée au moyen d'un rouleau de dépliage (34) jusqu'à la dimension finale de pliage.

9. Procédé selon l'une quelconque des revendications 6 à 8,
**caractérisé en ce que**
la bande métallique (40) est guidée dans le rouleau de renvoi et/ou le rouleau de pliage (32, 33) et/ou les rouleaux de guidage (30, 31) dans une gorge (30.1).

10. Procédé selon l'une quelconque des revendications 6 à 9,
**caractérisé en ce que**
le rouleau de pliage (33) et le rouleau de renvoi (32, 33) sont montés fixes et la bande métallique enroulée (40) est enroulée sur un porte-outil (20) monté à rotation.

11. Procédé selon l'une quelconque des revendications 6 à 10,
**caractérisé en ce que**
la bande métallique (40) est alimentée à l'état non plié au moyen d'une unité d'alimentation du ou des rouleaux de pliage (33) et le ou des rouleaux de pliage (33) sont entraînés passivement.

12. Procédé selon l'une quelconque des revendications 6 à 11,
**caractérisé en ce que**
un paquet de plusieurs couches (12) est enroulé, puis **en ce que** la hauteur du paquet de couches dans la direction du paquet de couches est déterminée, **en ce que** la différence entre la hauteur du paquet de couches et la hauteur de consigne du composant est déterminée et **en ce que**, à partir de cette différence, le nombre de couches encore manquantes et nécessaires est déterminé et enroulé.

13. Procédé selon l'une quelconque des revendications 6 à 13,
**caractérisé en ce que**
une soudure reliant les couches (12) est réalisée.
